Europäisches Patentamt

European Patent Office

Office européen des brevets

(11) Publication number: **0 141 529**
**B1**

(12) **EUROPEAN PATENT SPECIFICATION**

(45) Date of publication of patent specification: **23.05.90**

(51) Int. Cl.⁵: **B 01 D 17/04**, F 28 D 15/02

(21) Application number: **84306642.4**

(22) Date of filing: **28.09.84**

(54) Apparatus and method for separating an oil-water emulsion.

(30) Priority: **29.09.83 US 537008**

(43) Date of publication of application:
**15.05.85 Bulletin 85/20**

(45) Publication of the grant of the patent:
**23.05.90 Bulletin 90/21**

(84) Designated Contracting States:
**AT BE CH DE FR GB IT LI LU NL SE**

(56) References cited:
**US-A-2 286 654**
**US-A-2 868 313**
**US-A-3 318 448**
**US-A-3 468 300**
**US-A-3 581 471**
**US-A-3 595 304**

(73) Proprietor: **GATTLIN RESEARCH CO., INC.**
**P.O. Box 37349 Station D**
**Albuquerque New Mexico 87176 (US)**

(72) Inventor: **Spehar, John James**
**P.O. Box 37349 Station D**
**Albuquerque New Mexico 87176 (US)**

(74) Representative: **Boon, Graham Anthony**
**Elkington and Fife Beacon House 113 Kingsway**
**London, WC2B 6PP (GB)**

Courier Press, Leamington Spa, England.

## Description

The invention relates to an apparatus and a method for separating an oil-water emulsion. It is primarily intended to be used to receive and separate the emulsion emerging from an oil well into free gas, free water, and oil. It can also be used in other applications requiring this separation function.

Many prior art systems for separating an oil-water emulsion are known and most of them depend upon the application of heat to the emulsion to hasten the separation of the oil from the water. However, prior art systems depend upon a fire tube, usually in the shape of U, extending directly into the vessel containing the emulsion. This arrangement presents serious problems of local and excessive heating of that volume of emulsion in the immediate vicinity of the surface of the fire tube; temperature rise expansion stresses, undesirable evaporation of those components of petroleum in the emulsion having a low boiling point; excessive scaling of the surfaces of the fire tube; and the very real danger of fire in the vessel when the fire tube fails, and high temperature flames impact directly into the emulsion.

US—A—3581471 describes an oil and water emulsion treating apparatus comprising a vessel having an emulsion inlet adjacent to the top of the vessel, a water outlet at the bottom of the said vessel and a treated oil outlet at the top of said vessel, and a heater. The heater comprises a heater tube to which is connected a heating means in the form of an oil or gas burner assembly.

US—A—3468300 describes the use of heat pipes as heat transfer means for a railway tank car for the transport of lading adapted to be maintained at a predetermined temperature, particularly during transit.

US—A—2868313 discloses a system and a structure for the separation of an oil-water emulsion, but the inventors thereof use the well known and industry-standard fire tube extending directly into the vessel. The teaching thereof appears to be directed to the use of a series of baffles and plates to prevent turbulence in the emulsion.

The applicant is also aware of the following prior art:

| | |
|---|---|
| US—A—2,286,654 | US—A—4,067,315 |
| US—A—2,732,070 | US—A—4,224,925 |
| US—A—2,779,143 | US—A—4,226,282 |
| US—A—3,229,759 | US—A—4,329,159 |
| US—A—3,815,552 | US—A—4,394,344 |
| US—A—3,945,433 | FR—A—1,210,907 |

A bibliography entitled "Heat Pipe Technology" dated September 30, 1981 published by the Technology Application Center. The University of New Mexico, Albuquerque, New mexico 87131.

In accordance with the present invention there is provided an oil and water emulsion treating apparatus comprising a vessel having an emulsion inlet adjacent to the top of said vessel, a water outlet at the bottom of said vessel and a treated oil outlet at the top of said vessel, and a heater, characterized in that the heater has a combustion chamber external to said vessel and an array of heat pipes contained in part within said combustion chamber and extending into the said vessel and into the emulsion to break the emulsion into free water and treated oil, the said heat pipes being mutually parallel and forming an acute angle with the horizontal as a plane of reference.

The invention further provides a method of separating an oil-water emulsion comprising the steps of:
(a) generating heat for said emulsion by combustion external to a vessel containing said emulsion;
(b) transferring the heat into said vessel by heat pipes; and
(c) exhausting the separated oil and water from the vessel.

The invention is capable of hastening the separation of oil from water and improving the thermal efficiency accepted by the industry.

In the accompanying drawings:
Figure 1 is a perspective view, partly cut away, showing a typical heat pipe;
Figure 2 is an elevation view, partly cut away, showing the prior art system; and
Figure 3 is an elevation view, partly cut away, showing an emulsion treating apparatus according to the invention.

The present applicant has found that unexpected and unobvious advantages and results flow from the use of a heat pipe with a vessel containing an oil-water emulsion to hasten the separation of the fluids. For example, the expected industry efficiency of about 30—37% has been raised to about 74%. This is in addition to the advantages of the elimination of thermal expansion stresses inherent in the fire tube design as well as the elimination of fire danger when the fuel combustion chamber is entirely external to the vessel. Experience with the prior art fire tube installations has shown that localized hot spots develop in the tube with resulting metal distortion and failure. The heat pipe array used herein results in a uniform temperature, with lack of local boiling of the emulsion. This uniformity results in less driving off of the fractions of the petroleum having a low boiling point.

The heat pipe is a high performance heat transfer device which can transport heat at high rates and over long distances with a very small temperature gradient. The phenomena of evaporation, condensation, and surface-tension pumping of a liquid in a capillary wick are used to transfer latent heat of vaporization continuously from one region to another, without the aid of external work.

2

Within a given temperature range, a heat pipe performs like a high conductance thermal conductor. This high conductance property is dependent on the thermophysical properties and processes of the internal working fluid. Thus the heat pipe can have a heat transfer rate thousands of times greater than the best solid heat conductors of the same dimensions. However, the heat pipe is normally not characterized by an effective thermal conductivity, because it is actually a convective heat transfer device which utilizes the convective processes of evaporation and condensation. The heat pipe is properly characterized by two convective heat transfer coefficients, one for the evaporation process and one for the condensation process. It is simple, relatively easy to manufacture, inexpensive, and operates silently and reliably for long lifetimes.

The transfer of heat by evaporating and condensing a liquid is not new. For many years, turbine blades and piston engine valves have been cooled by the internal evaporation and condensation of a liquid metal working fluid. Evaporation and condensation devices called reflux condensers or thermosyphons which require gravity for liquid return, have also been used for many applications including cooling electronic systems. Steam generators for space heating and power generation (Rankine cycle systems) commonly use the evaporation and condensation heat transfer process. However, all of these devices require some external power to return the condensate back to the evaporator. External power from gravity, acceleration forces, or externally powered boiler feed pumps is required, whereas the heat pipe relies only on the self-contained sources of surface tension pumping in a capillary wick to return the condensate to the evaporator region.

The modern form of the heat pipe was invented in 1963 by George M. Grover of the Los Alamos Scientific Laboratory, Los Alamos, New Mexico. Dr. Grover and his colleagues conceived the name "heat pipe" for this device, which was originally developed for use in special spacecraft power generating systems where no gravity field was present. US—A—3,229,759 referred to above which primarily relates to a lithium liquid metal heat pipe invented by Dr. Grover. The first heat pipe built by Grover used a porous ceramic as the capillary wick, water as the working fluid, and was enclosed in a glass tube. Later work at Los Alamos concentrated on high temperature heat pipes with liquid metal fluids such as liquid sodium, potassium, and lithium.

In April 1967 the first zero g test of a heat pipe was conducted by J. E. Deverall, et al. of the Los Alamos Scientific Laboratory. This successful heat pipe experiment on an orbiting satellite demonstrated that heat pipes were useful for heat transfer on spacecraft. Subsequently, heat pipes have been used on a number of spacecraft.

Generally, heat pipes are built from circular cross-section tubes. However, the shape of the heat pipe may be varied to fit the application flat plate, square tube, curved container, or flexible container. The structural elements of the heat pipe are: a closed outer container, a capillary wick and a working fluid exhibiting the desired thermal characteristics. Working fluid examples include water, alcohols, Freons, ammonia, low temperature cyrogenic liquids, and high temperature liquid metals. The wick is normally held uniformly against the inside wall of the container. Among the wick materials that have been used are woven cloth, fibreglass, porous metal, wire screen, and narrow grooves cut lengthwise or circumferentially in the pipe wall.

In building an ordinary heat pipe, the pipe and wick are carefully cleaned and all non-condensing gases are evacuated from the container. Thus, only the vapour of the working fluid fills the central vapour space and liquid saturates the capillary wick. The region where heat is added to the heat pipe is referred to as the evaporator and the region where heat is removed is called the condenser. The region between the evaporator and condenser is typically referred to as the adiabatic or transport section of the heat pipe.

During the evaporation process in a heat pipe, heat may be absorbed from the saturated wick at high rates because the product of latent heat or vaporization and the mass flow rate of the liquid is large. The temperature at which the evaporation occurs depends primarily on the external heat input, the evaporator geometry, and the sink temperature. The pressure of the generated vapour is the saturated vapour pressure corresponding to the evaporation temperature. As the temperature of the evaporator is increased, the vapour pressure increases in this region causing a vapour pressure gradient between the evaporator region and the remaining vapour space in the heat pipe. This pressure gradient drives the heated vapour out of the evaporator with a substantial amount of heat energy in the form of latent energy. As the heated vapor contacts the cool walls in the unheated portion of the heat pipe, it condenses, giving up its latent heat of vaporization. At a given vapour pressure, the evaporation and condensation temperatures are very nearly equal. Thus, the condensing vapour flow heats the condenser region to a temperature nearly equal to that in the evaporator.

The fact that heat must be transferred through the heat pipe wick for vaporization to occur at the liquid-vapour interface, gives rise to a limit on the heat pipe capacity. Normally, liquid is vaporized only at the wick surface as a result of heat conducted through the wick. However, since the vapour at the wick surface is saturated vapour, the fluid within the wick at the evaporator is superheated. The greatest superheating occurs at the interface of the wick and the pipe wall. If the superheating becomes sufficiently large (it increases with the heat transfer rate), the fluid will begin to boil within the wick. For some wick-liquid combinations, such as water in a porous powder metal wick, the liquid will recede down into the wick and form a thin layer against the wall. Usually it is desirable to operate a heat pipe under conditions such that the superheating within the wick is below that of incipient boiling.

EP 0 141 529 B1

The condenser of a heat pipe is that region (or regions) where heat is extracted. Thus, as a consequence, it must be coupled by either conduction, convection, or radiation to a sink at a temperature lower than that of the heat pipe.

The heat transfer process at the condenser section is a much simpler phenomenon than at the evaporator. The vapour is condensed at the wick surface giving up its latent heat of vaporization which is conducted through the wick to the pipe wall. In the case of condensation, the conduction temperature drop results in subcooling of the liquid which is a stable situation. A limit on the condenser heat transfer due to condenser flooding exists but htis is a hydrodynamic limit rather than a heat transfer limit. The condenser limit imposed by the kinetic rate of vapour exchange is sufficiently high so that it can be neglected except for some liquid metal heat pipes.

The evaporation-condensation heat transfer process causes a depletion of liquid from the evaporator and an accumulation of liquid in the condenser, which must be equalized by the surface-tension pumping of the liquid in the capillary wick. In order for the capillary wick to function properly, it is necessary for the liquid to wet the surfaces of the wick structure. When proper wetting occurs, the liquid will readily be drawn into and saturate the wick by the liquid surface-tension forces. The surface tension forces exist along the free surface interface between the liquid in the saturated wick and the adjacent vapour space. As heating causes liquid to be depleted from the evaporator and the local vapour pressure to increase, the free surface interface becomes depressed into the surface pores of the evaporator wick. In the condenser, the accumulation of liquid and lower vapour pressure causes the free surface interface to become nearly flat. This difference in the shape of the free surface interface between the evaporator and the condenser is sustained by the difference or surface tension forces in the two regions. The result is a pressure gradient in the liquid which causes liquid to flow through the wick from the condenser to the evaporator.

The capillary wick which connects the condenser to the evaporator should be of low resistance in order not to impede liquid flow unnecessarily. Also, the wick should have very small surface pores in the evaporator to provide a greater surface tension pumping force in the liquid. Thus, a steady flow of liquid in the wick and vapour in the vapour space permits heat to be transferred from the evaporator to the condenser continuously at high rates with a very small temperature drop.

The performance of the heat pipe is limited by the ultimate pumping capacity of the wick. If the heat input rate exceeds the capability of the wick to supply liquid, the wick will begin to dry out and its temperature will rise rapidly.

Gravity or acceleration forces can also affect the performance of the heat pipe. If a pipe is subjected to a force which opposes the liquid flow in the wick, the liquid flow rate will decrease. This occurs because some of the surface tension pumping force must be diverted to overcome the opposing external force. As a result, the total heat transfer capacity of the heat pipe is reduced. Conversely, if a gravity or acceleration force is applied to aid the liquid flow in the wick, the heat transfer capacity will increase. When a heat pipe is operated in a horizontal position in a gravity-free, acceleration-free environment, the operation is unaffected by these outside forces.

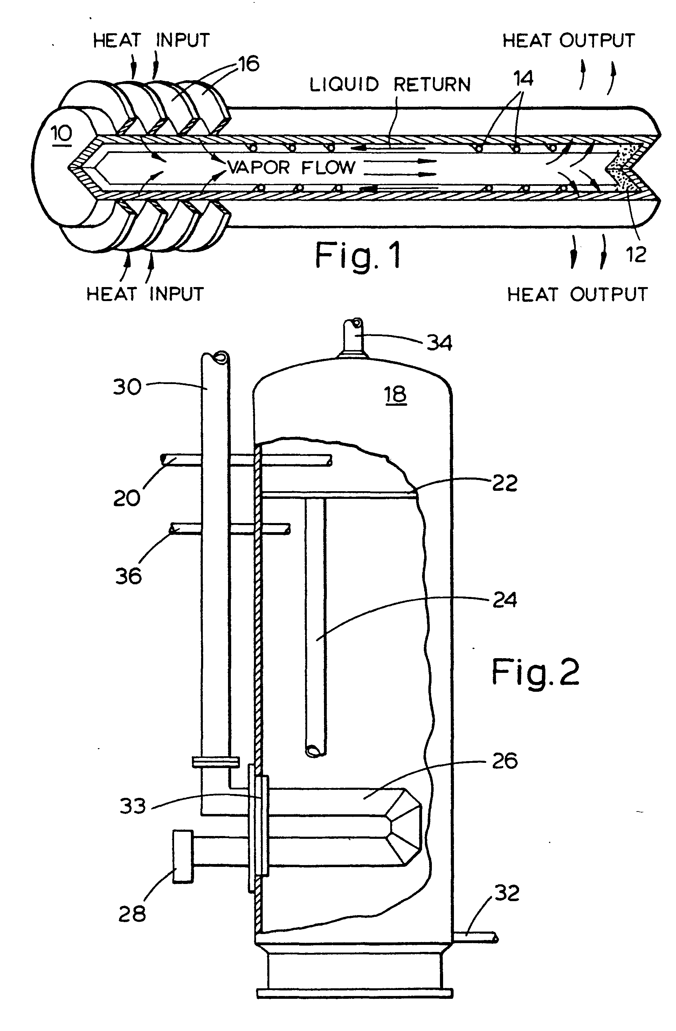

Referring now to the accompanying drawings, Figure 1 shows the structure of a typical heat pipe having an outer shell 10 which has a cloth or other porous material lining 12 and a wick 14 embedded therein. Fins 16 surrounding the heat input area of the shell are depended upon to increase the surface exposed to the heat source and the efficiency of the heat pipe. As discussed above, the evaporation of the working fluid takes place at one end of the housing and the condensation process, with resulting transfer of heat, takes place at the other end.

Figure 2 illustrates the prior art structure used by industry to separate an oil-water emulsion into free gas, oil, and water. A vessel 18 is adapted to receive emulsion through an inlet pipe 20. The emulsion spreads over a perforated plate 22 and a substantial quantity flows through a drain pipe 24 to the general vicinity of a U-tube 26. The tube 26 is a fire tube and receives burning gas from a burner 28 and exhausts it through a stack 30. Note that the fire tube is in intimate contact with the emulsion and the danger of internal fire is high when the tube fails, as it does in industry practice. A flange 33 is bolted to the vessel 18 for ease of replacement when the fire tube fails. The natural tendency of the emulsion to separate is hastened by the application of heat, and free gas is driven off, together with some vapour formed by these fractions of the petroleum having a low boiling point through a gas discharge pipe 34. The water is drained off at a pipe 32 and the treated oil is discharged through a pipe 36 to storage tanks.

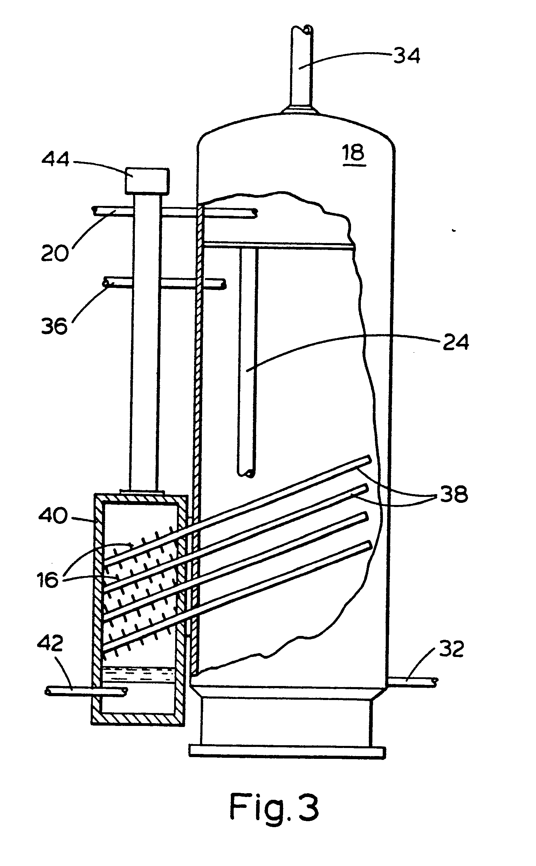

Referring now to Figure 3, which shows an embodiment of the invention, and wherein the same reference characters are used to identify like parts, vessel 18 has emulsion inlet pipe 20, perforated plate 22, drain pipe 24, water exhaust pipe 32, gas exhaust pipe 34, and treated oil exhaust pipe 36, as before. Heat is applied to the emulsion through an array of any number of heat pipes 38 having fins 16 at the heat input area and extending into the emulsion volume in vessel 18 at an angle from the horizontal of about 10 degrees to assist the return flow of the working fluid in each respective pipe. A combustion chamber 40 having an inlet 42 for fuel (usually gas) and an exhaust stack 44, is fastened to the vessel 18 substantially as shown. The inlet 42 supplies fuel to a burner located in the combustion chamber 40. The working fluid used is preferably toluol, an aromatic hydrocarbon having vapour pressure characteristics which are appropriate for this application and this temperature range. As an example, the combustion chamber temperature is about 1000°F (538°C). The tube fintip temperature is about 500°F (260°C), the toluol temperature at the heat

4

input area is about 325°F (163°C) and the gas-exhaust temperature from the combustion chamber is about 250—325°F (122—163°C).

The use of a heat pipe in a vessel separating an oil water emulsion produces unexpected and unobvious results far beyond the increased safety and elimination of the thermal expansion stresses. The efficiency of the heat pipe system is a substantial improvement over the industry expected efficiency, using a fire tube, of about 30—37 percent. An efficiency test of the heat pipe system illustrated herein was conducted and the results are as follows:

Data

| | | |
|---|---|---|
| Total fluid production | : | 777431 (489 Barrels) |
| Oil production | : | 755171 (475 Barrels) |
| Water production | : | 22261 (14 Barrels) |
| Ending gas meter reading | : | 78544.6 m³ (2773781 cu. ft.) |
| Beginning gas meter reading | : | 78361.5 m³ (2767316 cu. ft.) |
| Total gas consumption | : | 183.1 m³ (6465 cu. ft.) |
| Fluid density— | | |
|   40 API oil | : | 0.823 kg/l (6.87 lbs/US gal) |
|   salt water | : | 1.026 kg/l (8.56 lbs/US gal) |
| Fluid specific heat— | | |
|   40 API oil | : | $5.93{\times}10^{-4}$ kw · hours · kg$^{-1}$°C (0.51 BTU/lb—°F) |
|   salt water | : | $10.92{\times}10^{-4}$ kw · hours · kg$^{-1}$°C (0.94 BTU/lb—°F) |
| Average fluid inlet temperature | : | 10°C (50°F) |
| Average heated fluid temperature | : | 45.5°C (114°F) |

Assumptions

Two barrels of salt water produced per day.
Heating value of casing head gas is 10.3 kw · hours/m³ (1000 BTU per cubic foot).
Oil of 40 API gravity.

Total product heat input
A. Oil
    (475 barrels) (42 US gallons/barrel)
    (6.87 pounds/gallon)
    (0.51 BTU pound—F) (64°F)=4,473,524 BTU.
    (1310 kw · hours).

B. Salt water
    (14 barrels) (42 US gallons/barrel).
    (8.56 pounds/gallon).
    (0.94 BTU/pound—F) (64°F)=302,802 BTU.
    (89 kw · hours).

Gas heat release
    (6465 cubic feet) (1000 BTU/cubic foot)=6,465,000 BTU (1893 kw · hours).

Efficiency

$$\frac{4{,}776{,}326 \text{ BTU}}{6{,}465{,}000 \text{ BTU}} = \frac{1399 \text{ kw} \cdot \text{hours}}{1893 \text{ kw} \cdot \text{hours}} = 73.9\%$$

## Claims

1. An oil and water emulsion treating apparatus comprising a vessel (18) having an emulsion inlet (20) adjacent to the top of said vessel, a water outlet (32) at the bottom of said vessel and a treated oil outlet (36) at the top of said vessel, and a heater, characterized in that the heater has a combustion chamber (40) external to said vessel and an array of heat pipes (38) contained in part within said combustion chamber (40) and extending into the said vessel (18) and into the emulsion to break the emulsion into free water and treated oil, the said heat pipes (38) being mutually parallel and forming an acute angle with the horizontal as a plane of reference.

2. An apparatus according to claim 1, including a source of fuel (42) connected to said heater.

3. An apparatus according to claim 1 or 2, wherein the combustion chamber ends of the said heat pipes (38) each have a plurality of heat conducting fins (16) to increase heat transfer from the chamber (40) to the pipes (38).

4. An apparatus according to any preceding claim, wherein the said acute angle is ten degrees.

EP 0 141 529 B1

5. An apparatus according to any preceding claim, wherein the working fluid contained within the said heat pipes (38) is toluol.

6. A method of separating an oil-water emulsion comprising the steps of:

(a) generating heat for said emulsion by combustion external to a vessel containing said emulsion;

(b) transferring the heat into said vessel by heat pipes; and

(c) exhausting the separated oil and water from the vessel.

7. A method according to claim 6, wherein the working fluid contained within said heat-pipes is toluol.

**Patentansprüche**

1. Vorrichtung zum Trennen Öl-Wasser-Emulsion, mit einem Behälter (18), der nahe dem oberen Ende des Behälters einen Einlaß (20) für Emulsion, einen Auslaß (32) für Wasser am Boden des Behälters und einen Auslaß (36) für abgetrenntes Öl am oberen Ende des Behälters aufweist, und mit einer Heizeinrichtung, dadurch gekennzeichnet, daß die Heizeinrichtung eine Brennkammer (40) außerhalb des Behälters und eine Anzahl von Heizrohren (38) aufweist, die teilweise in der Brennkammer (40) angeordnet sind und sich in den Behälter und in die Emulsion erstrecken, um die Emulsion in freies Wasser und abgetrenntes Öl aufzubrechen, wobei die Heizrohre (38) parallel zueinander angeordnet sind und einen spitzen Winkel mit der Horizontalen als Referenzebene bilden.

2. Vorrichtung nach Anspruch 1, dadurch gekennzeichnet, daß eine Brennstoffquelle (42) mit der Heizeinrichtung verbunden ist.

3. Vorrichtung nach Anspruch 1 oder 2, dadurch gekennzeichnet, daß die in der Brennkammer befindlichen Enden der Heizrohre (38) jeweil eine Mehrzahl von Wärmeleite-Rippen (16) aufweisen, um den Wärmeübergang von der Brennkammer (40) zu den Heizrohren (38) zu erhöhen.

4. Vorrichtung nach einem der vorstehenden Ansprüche, dadurch gekennzeichnet, daß der spitze Winkel 10° beträgt.

5. Vorrichtung nach einem der vorstehenden Ansprüche, dadurch gekennzeichnet, daß die in den Heizrohren (38) enthaltene Flüssigkeit Toluol ist.

6. Verfahren zum Trennen einer Öl-Wasser-Emulsion, gekennzeichnet durch die folgenden Schritte:

a) es wird Wärme für die Emulsion durch Verbrennung außerhalb die Emulsion enthaltenden Behälters erzeugt;

b) es wird die Wärme in den Behälter durch Heizrohre übertragen und;

c) das vom Wasser getrennte Öl und des Wasser werden aus dem Behälter abgelassen.

7. Verfahren nach Anspruch 6, dadurch gekennzeichnet, daß die in den Heizrohren enthaltene Arbeitsflüssigkeit Toluol ist.

**Revendications**

1. Un appareil de traitement d'émulsion d'huile et d'eau comprenant un réservoir (18) comportant une entrée d'émulsion (20) adjacente au sommet dudit réservoir, une sortie d'eau (32) au fond dudit réservoir et une sortie d'huile traitée (36) au sommet dudit réservoir, et un dispositif de chauffage, caractérisé en ce que le dispositif de chauffage comporte une chambre de combustion (40) extérieure audit réservoir et un réseau de tuyaux chauffants (38) contenus en partie à l'intérieur de ladite chambre de combustion (40) et s'étendant dans ledit réservoir (18) et dans ladite émulsion pour briser l'émulsion en eau libre et en huile traitée, lesdits tuyaux chauffants (38) étant parallèles entre eux et formant un angle aigu avec l'horizontale prise comme plan de référence.

2. Un appareil selon la revendication 1, comprenant une source de carburant (42) reliée audit dispositif de chauffage.

3. Un appareil selon la revendication 1 ou 2, dans lequel les extrémités desdits tuyaux chauffants (38) du côté de la chambre de combustion comportent chacun plusieurs ailettes conductrices de chaleur (16) pour augmenter le transfert de chaleur depuis la chambre (40) vers les tuyaux (38).

4. Un appareil selon l'une quelconque des revendications précédentes, dans lequel ledit angle aigu est de 10°.

5. Un appareil selon l'une quelconque des revendications précédentes, dans lequel le fluide de travail contenu dans lesdits tuyaux chauffants (38) est du toluol.

6. Un procédé pour séparer une émulsion huile-eau comprenant les étapes consistant à:

(a) engendrer la chaleur pour ladite émulsion au moyen d'une combustion extérieure à un réservoir contenant l'émulsion;

(b) transférer la chaleur dans ledit réservoir par des tuyaux chauffants; et

(c) évacuer hors du réservoir l'huile et l'eau séparées.

7. Un procédé selon la revendication 6, dans lequel le fluide de travail contenu à l'intérieur desdits tuyaux chauffants est du toluol.

6

Fig.1

Fig.2

1

Fig.3